# EUROPÄISCHE PATENTANMELDUNG

(11) **EP 2 325 984 A1**
(43) Veröffentlichungstag der Anmeldung: **25.05.2011**
(21) Anmeldenummer: 09176900.0
(22) Anmeldetag: 24.11.2009
(51) Int. Cl.: H02M 1/36, H02N 6/00

(54) **Zuschalten eines Photovoltaikfeldes mit hoher Leerlaufspannung**

(71) Anmelder: SMA Solar Technology AG, 34266 Niestetal (DE)
(72) Erfinder: Lehmann, Reinhard, 34123 Kassel (DE)
(74) Vertreter: Rehberg Hüppe + Partner

(57) **Zusammenfassung**

Zum Zuschalten eines Photovoltaikfeldes (2) über einen Wechselrichter (3) zu einem Wechselstromnetz (4) wird zunächst ein Gleichspannungszwischenkreis (7) am Eingang des Wechselrichters (3) aus dem Wechselstromnetz (4) vorgeladen, wobei die Zwischenkreisspannung des Gleichspannungszwischenkreises (7) mit dem an das Wechselstromnetz (4) angeschlossenen Wechselrichter (3) auf einen vorgegebenen Wert eingeregelt wird, und dann das Photovoltaikfeld (2) dem Gleichspannungszwischenkreis (7) zugeschaltet, dessen Zwischenkreisspannung auf den vorgegebenen Wert geregelt wird.

## Beschreibung

### TECHNISCHES GEBIET DER ERFINDUNG

Die Erfindung bezieht sich auf ein Verfahren zum Zuschalten eines Photovoltaikfeldes über einen Wechselrichter zu einem Wechselstromnetz. Weiterhin bezieht sich die Erfindung auf eine Vorrichtung zur Einspeisung elektrischer Energie von einem Photovoltaikfeld in ein Wechselstromnetz, die die Merkmale des Oberbegriffs des unabhängigen Patentanspruchs 11 1 aufweist.

### STAND DER TECHNIK

Beim Zuschalten eines Photovoltaikfeldes über einen Wechselrichter zu einem Wechselstromnetz ist Sorgfalt geboten, um das Auftreten unzulässig hoher Ströme durch oder das Anfallen unzulässig hoher Spannungen über den hierbei verwendeten Schaltungsbauteilen zu vermeiden. Der Gefahr einer Überlastung dieser Bauteile kann zwar grundsätzlich auch durch eine höhere Belastungsfestigkeit der Bauteile begegnet werden, diese Vorgehensweise ist jedoch in der Regel mit extremen Kostensteigerungen und Wirkungsgradverlusten verbunden. Es sind daher Verfahren und Vorrichtungen bevorzugt, die hohen Belastungen der verwendeten Bauteile beim Zuschalten vorbeugen.

Dies gilt z. B. insbesondere vor dem Hintergrund einer Entwicklung hin zu höheren Ausgangsspannungen von Photovoltaikfeldern, um ohne Erhöhung der Leitungsquerschnitte größere elektrische Leistungen übertragen zu können. Diese höheren Ausgangsspannungen der Photovoltaikfelder im Betrieb gehen mit noch deutlich darüberliegenden Leerlaufspannungen der Photovoltaikfelder einher. Diese Leerlaufspannungen überschreiten schnell die zulässige Spannung über der Wechselrichterbrücke des jeweiligen Wechselrichters. Aus der

DE 20 2006 001 063 U1 ist es bekannt, der Wechselrichterbrücke eines Wechselrichters einen DC/DC-Wandler, wie beispielsweise einen Tiefsetzsteller, vorzuschalten, der eine Spannungsanpassung zwischen dem Photovoltaikfeld und dem Wechselrichter vornimmt. Der Tiefsetzsteller ist aber zumindest mit einem erhöhten apparativen Aufwand verbunden. Darüber hinaus verursacht er Leistungsverluste. Mit dem Problem der hohen Leerlaufspannung beim Zuschalten des Photovoltaikfeldes zu dem Wechselrichter beschäftigt sich die DE 20 2006 001 063 U1 nicht. Durch geeignetes Takten des Schalters eines der Wechselrichterbrücke eines Wechselrichters vorgeschalteten Tiefsetzstellers wäre es zwar möglich, beim Zuschalten eine Belastung der Wechselrichterbrücke mit der vollen Leerlaufspannung des Photovoltaikfeldes zu vermeiden, es bleiben aber die von ihm im normalen Betrieb verursachten Leistungsverluste, soweit er nicht mit weiterem apparativem Aufwand aus dem Leistungsstrompfad herausgeschaltet wird, nachdem die Leerlaufspannung auf die Ausgangsspannung im normalen Betrieb des Photovoltaikfeldes abgesunken ist.

Aus der JP 11312022 A ist es bekannt, die Wechselrichterbrücke eines Wechselrichters vor der hohen Leerlaufspannung eines angeschlossenen Photovoltaikfeldes durch eine Spannungsteilung zwischen einem in eine der Anschlussleitungen geschalteten und einem der Wechselrichterbrücke parallel geschalteten Widerstand zu schützen. Durch Kurzschließen des Widerstands in der Anschlussleitung und Abtrennen des der Wechselrichterbrücke parallel geschalteten Widerstands wird die Spannungsteilung im normalen Betrieb aufgehoben, dadurch werden auch anhaltende Verluste aufgrund der Widerstände verhindert. Die Spannungsteilung ist mit einem erhöhten Aufwand, insbesondere für ihr Ausschalten im normalen Betrieb, verbunden.

Wechselrichter zur Einspeisung von elektrischer Energie von Photovoltaikfeldern weisen üblicherweise eine Spannungsregelung für einen Gleichspannungszwischenkreis auf, um ein sogenanntes Maximum Power Point (MPP)-Tracking durchführen zu können. Dabei wird die Ausgangsspannung des Photovoltaikfeldes über die Zwischenkreisspannung auf einen Wert eingestellt, bei dem das Photovoltaikfeld unter den aktuellen Betriebsbedingungen eine maximale elektrische Leistung abgibt.

### AUFGABE DER ERFINDUNG

Der Erfindung liegt die Aufgabe zugrunde, ein Verfahren zum Zuschalten eines Photovoltaikfeldes über einen Wechselrichter zu einem Wechselstromnetz und eine Vorrichtung zur Einspeisung elektrischer Energie von einem Photovoltaikfeld in ein Wechselstromnetz aufzuzeigen, bei denen mit geringem apparativem Aufwand dem Problem einer hohen Leerlaufspannung des Photovoltaikfeldes begegnet wird.

### LÖSUNG

Die Aufgabe der Erfindung wird durch ein Verfahren mit den Merkmalen des unabhängigen Patentanspruchs 1 und durch eine Vorrichtung mit den Merkmalen des unabhängigen Patentanspruchs 11 gelöst. Bevorzugte Ausführungsformen des neuen Verfahrens und der neuen Vorrichtung sind in den abhängigen Patentansprüchen definiert.

### BESCHREIBUNG DER ERFINDUNG

Bei dem erfindungsgemäßen Verfahren zum Zuschalten eines Photovoltaikfeldes über einen Wechselrichter zu einem Wechselstromnetz wird ein Gleichspannungszwischenkreis am Eingang des Wechselrichters aus dem Wechselstromnetz vorgeladen, wobei zumindest zum Ende des Vorladens hin die Zwischenkreisspannung des Gleichspannungszwischenkreises mit dem an das Wechselstromnetz angeschlossenen Wechselrichter auf einen vorgegebenen Wert eingeregelt wird. Dann wird das Photovoltaikfeld dem Gleichspannungszwischenkreis mit der auf den vorgegebenen Wert geregelten Zwischenkreisspannung zugeschaltet. Dieses Zuschalten erfolgt ohne eine vorherige oder gleichzeitige Anpassung der Leerlaufspannung des Photovoltaikfeldes an die Zwischenkreisspannung. Vorhandene Spannungsunterschiede werden hart überbrückt. Dies bleibt jedoch ohne negative Folgen, da die resultierenden Stromflüsse aus dem Photovoltaikfeld begrenzt sind und einerseits von der Pufferkapazität des Gleichspannungszwischenkreises und andererseits von dem bereits aktiven Wechselrichter durch Einspeisung in das Wechselstromnetz abgefangen werden. Die Spannungsregelung für die Zwischenkreisspannung aktueller Wechselrichter erweist sich als ausreichend schnell, um die Leistungsflussrichtung nach dem Zuschalten des Photovoltaikfeldes in Einspeiserichtung umzukehren, um so einem Anstieg der Zwischenkreisspannung zu begegnen, bevor diese kritische Ausmaße annehmen kann. Auch die sowieso vorhandene Kapazität des Gleichspannungszwischenkreises muss für die Umsetzung des neuen Verfahrens nicht erhöht werden, um kritische Spannungsanstiege beim Zuschalten des Photovoltaikfeldes zu vermeiden.

Dies gilt selbst dann, wenn der Wert, auf den die Zwischenkreisspannung erfindungsgemäß eingeregelt wird, viel kleiner als die Leerlaufspannung des Photovoltaikfeldes vorgegeben wird, d. h. auch bei einer deutlich über seiner Ausgangsspannung im üblichen Betrieb liegenden Leerlaufspannung des Photovoltaikfeldes und einer auf den Wert dieser kleineren Ausgangsspannung eingeregelten Zwischenkreisspannung. Das neue Verfahren führt selbst in dem Fall, dass die maximale Leerlaufspannung des Photovoltaikfeldes dem Gleichspannungszwischenkreis mit der auf den vorgegebenen Wert geregelten Zwischenkreisspannung unmittelbar, d. h. ohne vorherige Spannungsangleichung, zugeschaltet wird, zu keiner kritischen Erhöhung der Zwischenkreisspannung. Daher kann auf DC/DC-Wandler zur Spannungsanpassung zwischen dem Photovoltaikfeld und dem Gleichspannungszwischenkreis verzichtet werden.

Der Wert, auf den die Zwischenkreisspannung bei dem erfindungsgemäßen Verfahren vor dem Zuschalten des Photovoltaikfeldes eingeregelt wird, entspricht, wie bereits ausgeführt wurde, vorzugsweise einer üblichen Ausgangsspannung im normalen Betrieb des Photovoltaikfeldes und ist damit regelmäßig größer als eine Scheitelspannung des Wechselspannungsnetzes. Überraschender Weise sind die Spannungsregelungen aktueller Wechselrichter, die z. B. für das MPP-Tracking verwendet werden, in der Lage, die Zwischenkreisspannung mit elektrischer Energie aus dem Wechselstromnetz auch auf einen Wert oberhalb der Scheitelspannung des Wechselstromnetzes einzuregeln. Dabei nutzen die Spannungsregelungen die regelmäßig zwischen der Wechselrichterbrücke des Wechselrichters und dem Wechselstromnetz vorgesehenen Induktivitäten nach Art eines Hochsetzstellers. Durch das Einregeln der Zwischenkreisspannung auf einen Wert oberhalb der Scheitelspannung des Wechselstromnetzes hat die Regelung der Zwischenkreisspannung einen stabilen Arbeitspunkt, in welchem nach dem sich anschließenden Zuschalten des Photovoltaikfeldes eine Einspeisung von elektrischer Energie und damit eine Ableitung von Ladung aus dem Zwischenkreis möglich ist.

Um selbst bei einer klein bemessenen Kapazität des Gleichspannungszwischenkreises und einer nur langsam reagierenden Spannungsregelung für die Zwischenkreisspannung einen Anstieg der Zwischenkreisspannung auf ein unkritisches Maß zu begrenzen, kann das Photovoltaikfeld in Segmente unterteilt werden, die dem Gleichspannungszwischenkreis mit der auf den vorgegebenen Wert geregelten Zwischenkreisspannung nacheinander zugeschaltet werden. Damit wird die Ladung, die beim Zuschalten des jeweiligen Segments zu dem Zwischenkreis in den Zwischenkreis fließen kann, und damit der mögliche Anstieg der Zwischenkreisspannung weiter begrenzt.

Das neue Verfahren läuft in den beiden Hauptschritten (i) Einregeln der Zwischenkreisspannung auf den vorgegebenen Wert und (ii) Zuschalten des Photovoltaikfeldes zu dem Gleichspannungszwischenkreis mit der auf den vorgegebenen Wert eingeregelten Zwischenkreisspannung ab. Dabei wird der erste Schritt (i) vorzugsweise in eine passive erste Vorladephase des Zwischenkreises, die sich direkt an das Verbinden des Wechselrichters mit dem Wechselstromnetz anschließt und die hier auch als Voraufladephase bezeichnet wird, sowie eine anschließende aktive zweite Vorladephase unterteilt, in der die Schalter des Wechselrichters so getaktet werden, dass die Zwischenkreisspannung über die Scheitelspannung des Wechselstromnetzes angehoben wird. In dem ersten Teilschritt kann zum ersten Vorladen des Gleichspannungszwischenkreises ein von dem Wechselstromnetz in den Gleichspannungszwischenkreis fließender Ladestrom mit den Freilaufdioden einer Wechselrichterbrücke des Wechselrichters gleichgerichtet werden. Dabei sind alle Schalter der Wechselrichterbrücke offen. Der zu Beginn der Vorladung des Zwischenkreises fließende Ladestrom kann zu groß werden, wenn er nicht gezielt beispielsweise durch eine Drossel oder einen Widerstand begrenzt wird. In der Regel sind dafür die inhärenten Widerstände ebenso wenig ausreichend wie eine Netzdrossel des Wechselrichters und/oder die Impedanz eines EMV-Filters am Ausgang des Wechselrichters. Daher ist es bevorzugt, wenn der Ladestrom zum ersten Vorladen des Gleichspannungszwischenkreises über einen Bypass geführt wird, der parallel zu einem Netzschalter gelegt ist und in dem eine strombegrenzende Vorrichtung vorgesehen ist. Alternativ kann hier auch ein Transformator zum Hochspannen der Spannung des Wechselstromnetzes vorgesehen sein, um den Gleichspannungszwischenkreis bereits auf **eine gegenüber der Scheitelspannung des Wechselstromnetzes erhöhte** Zwischenkreisspannung vorzuladen. Wenn diese erste Vorladung abgeschlossen ist, wird der Wechselrichter dem Netz über den normalen Netzschalter zugeschaltet und anschließend der Bypass unterbrochen. Zu diesem Zeitpunkt wird dann auch die Spannungsregelung der Zwischenkreisspannung auf den vorgegebenen Wert aktiviert. Bei der Spannungsregelung der Zwischenkreisspannung handelt es sich vorzugsweise um dieselben Einrichtungen und Maßnahmen, die bei bekannten Wechselrichtern in Verbindung mit dem MPP-Tracking verwendet werden, nur dass hier in der aktiven zweiten Vorladephase des ersten Schritts (i) und während des zweiten Schritts (ii) des neuen Verfahrens ein fester Wert für die Zwischenkreisspannung vorgegeben wird.

Der zweite Schritt (ii) des neuen Verfahrens wird bei Bedarf in Teilschritte des Zuschaltens einzelner Segmente des Photovoltaikfeldes unterteilt. Sobald das ganze Photovoltaikfeld zugeschaltet ist, kann die Regelung der Zwischenkreisspannung freigegeben werden, um statt auf einen festen Wert für die Zwischenkreisspannung auf den durch das MPP-Tracking vorgegebenen Wert zu regeln.

Sollte bei dem neuen Verfahren die Zwischenkreisspannung doch auf einen ungewollt hohen Wert ansteigen, der die Integrität des Wechselrichters zu gefährden droht, kann der Wechselrichter ab einer kritischen Spannungshöhe gesperrt werden, um Schäden zu vermeiden. Das Photovoltaikfeld wird dann von dem Wechselrichter abgetrennt. Nachdem sich die Zwischenkreisspannung durch eine üblicherweise vorhandene Entladungseinrichtung für die Kapazität des Gleichspannungszwischenkreises auf ein unkritisches Maß abgebaut hat, kann ein erneuter Versuch des Zuschaltens bei erneut auf den vorgegebenen Wert geregelter Zwischenkreisspannung erfolgen.

Die erfindungsgemäße Vorrichtung weist eine Zuschaltsteuerung auf, die zuerst den Netzschalter zum Zuschalten des Wechselrichters zu dem Wechselspannungsnetz schließt, dann die Regelung für die Zwischenkreisspannung aktiviert, um die Zwischenkreisspannung auf einen vorgegebenen Wert einzuregeln, und erst anschließend den Schalter zum Zuschalten des Photovoltaikfeldes schließt. Dabei kann der Netzschalter, wie bereits oben angedeutet wurde, in mehrere Schalter für parallele Stromwege aufgeteilt sein, ebenso wie der Schalter zum Zuschalten des Photovoltaikfeldes in mehrere Teilschalter zum Zuschalten jeweils nur eines Segments des Photovoltaikfeldes aufgeteilt sein kann.

Bei der neuen Vorrichtung können die Schalter der Wechselrichterbrücke eine kleinere zulässige Arbeitsspannung als die Leerlaufspannung des Photovoltaikfeldes aufweisen.

Der Wechselrichter der neuen Vorrichtung kann vor der Wechselrichterbrücke, insbesondere zwischen dem Schalter zum Zuschalten des Photovoltaikfeldes und der Wechselrichterbrücke, ausschließlich den Gleichspannungszwischenkreis aufweisen. Das heißt, weder vor noch hinter dem Schalter zum Zuschalten des Photovoltaikfeldes zu dem Wechselrichter muss ein DC/DC-Wandler zur Spannungsanpassung vorgesehen werden. Vorzugsweise wird auf solche DC/DC-Wandler bei der neuen Vorrichtung ganz verzichtet, um den damit verbundenen Aufwand und die damit verbundenen Verluste einzusparen.

Die weiteren bevorzugten Details der neuen Vorrichtung wurden bereits im Zusammenhang mit dem erfindungsgemäßen Verfahren erläutert.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Die Erfindung wird im Folgenden anhand eines Ausführungsbeispiels unter Bezugnahme auf die beigefügten Zeichnungen erläutert und beschrieben.
- Fig. 1: zeigt ein Einlinienschaltbild einer erfindungsgemäßen Vorrichtung; und
- Fig. 2: skizziert einen möglichen einfachen Aufbau des Wechselrichters der Vorrichtung gemäß Fig. 1.

### FIGURENBESCHREIBUNG

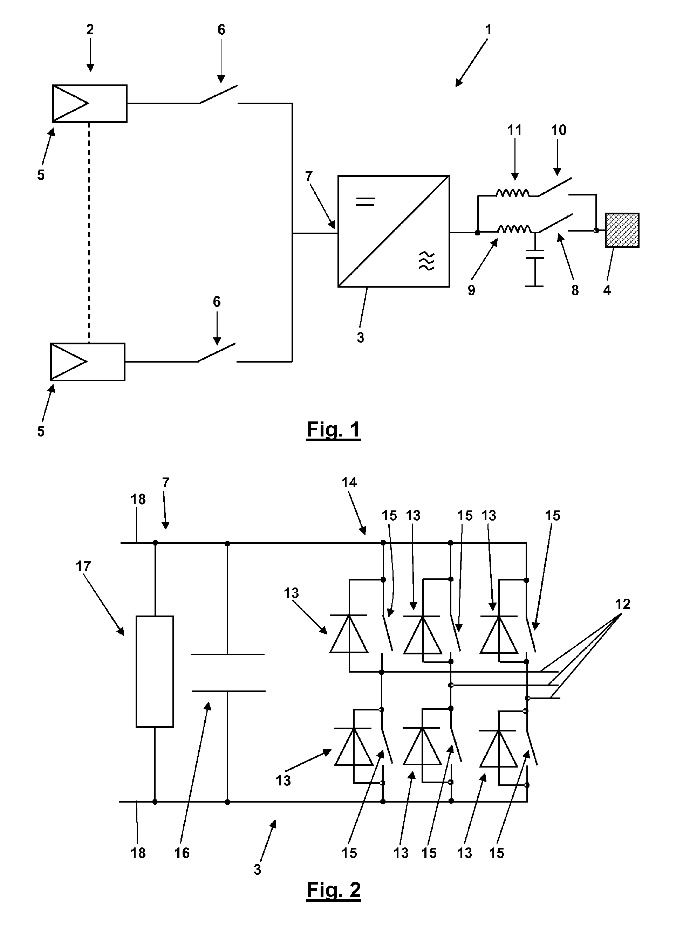

Die in **Fig. 1** skizzierte Vorrichtung 1 dient zum Zuschalten eines Photovoltaikfeldes 2 über einen Wechselrichter 3 zu einem Wechselstromnetz 4. Das Photovoltaikfeld 2 ist in einzelne Segmente 5 unterteilt, die über jeweils einen Schalter 6 mit einem hier nicht zeichnerisch hervorgehobenen Gleichspannungszwischenkreis 7, der hier zugleich der Eingangszwischenkreis des Wechselrichters 3 ist, verbindbar sind. Ausgangsseitig ist der Wechselrichter 3 dem Wechselstromnetz 4 über einen Netzschalter 8 zuschaltbar, wobei zwischen dem Netzschalter 8 und dem Wechselrichter 3 ein EMV-Filter 9 vorgesehen ist. Parallel zu dem Netzschalter und dem EMV-Filter 9 ist ein Hilfsnetzschalter 10 vorgesehen, mit dem eine Drossel 11 in Reihe geschaltet ist, die eine erheblich höhere Impedanz als das EMV-Filter 9 aufweist. Die der vorliegenden Erfindung zugrundeliegende Problematik besteht darin, dass das Photovoltaikfeld 2 und jedes seiner Segmente 5 eine höhere Leerlaufspannung aufweist, als sie für den Wechselrichter 3 verträglich ist. Die Ausgangsspannung des Photovoltaikfeldes 2 und seiner Segmente 5 im normalen Betrieb, d. h. deren Ausgangsspannung, wenn Strom in das Wechselstromnetz 4 eingespeist wird, ist hingegen für den Wechselrichter 3 unbedenklich. Um das Photovoltaikfeld 2 dem Wechselrichter 3 unter diesen Randbedingungen gefahrlos zuschalten zu können, wird wie folgt vorgegangen.

Zunächst wird der Hilfsnetzschalter 10 geschlossen. Dies führt dazu, dass aus dem Wechselstromnetz ein Wechselstrom in den Wechselrichter 3 fließt. Aus der Skizze gemäß Fig. 2 zum inneren Aufbau des Wechselrichters 3 wird deutlich, dass dieser über die Ausgangsleitungen 12 fließende Wechselstrom von Freilaufdioden 13 einer Wechselrichterbrücke 14 des Wechselrichters 3, die Schaltern 15 der Wechselrichterbrücke 14 jeweils antiparallel geschaltet sind, in einen Gleichstrom zwischen den Eingangsleitungen 18 gleichgerichtet wird. Dieser Gleichstrom lädt die Kapazität 16 des Gleichspannungszwischenkreises 7 des Wechselrichters 3 bis zur Scheitelspannung des Wechselstromnetzes auf. Dabei wird der auf diese Weise fließende Ladestrom durch die Drossel 11 gemäß Fig. 1 begrenzt. Diese Begrenzung ist nicht über den gesamten Aufladevorgang bis zur Scheitelspannung des Wechselstromnetzes 4 notwendig. Vielmehr kann schon während dieses Voraufladens der Netzschalter 8 geschlossen und der Hilfsnetzschalter 10 geöffnet werden. Nach dem passiven Voraufladen des Gleichspannungszwischenkreises 7 wird der Wechselrichter 3 aktiviert, d. h., eine hier nicht dargestellte Steuerung taktet seine Schalter 15, aber erst nachdem die Spannungsdifferenz zwischen der Scheitelspannung des Wechselstromnetzes 4 und der Zwischenkreisspannung bereits durch das passive Voraufladen reduziert ist. Die Taktung erfolgt zur Einregelung der Zwischenkreisspannung über der Kapazität 16 auf einen oberhalb der Scheitelspannung des Wechselstromnetzes 4 liegenden vorgegebenen Wert. Dabei wirken die Schalter 15 des Wechselrichters 3 in Verbindung mit der Induktivität des EMV-Filters wie ein Hochsetzsteller. Erst wenn dieser vorgegebene Wert der Zwischenkreisspannung, der im Bereich der typischen Betriebsspannungen beim Einspeisen von elektrischer Energie aus dem Photovoltaikfeld 2 in das Wechselstromnetz 4 liegt, eingeregelt ist, werden nacheinander die Schalter 6 gemäß Fig. 1 geschlossen, um das Photovoltaikfeld 2 dem Wechselrichter 3 zuzuschalten. Dabei wird keine Rücksicht auf eine Spannungsdifferenz zwischen der Leerlaufspannung des jeweiligen Segments 5 des Photovoltaikfeldes 2 zu der auf den vorgegebenen Wert eingeregelten Zwischenkreisspannung genommen. Dieses harte Zuschalten des Photovoltaikfeldes 2 erweist sich jedoch als unproblematisch, da die aus dem jeweiligen Segment 5 in den Zwischenkreis 7 fließenden Ladungen begrenzt sind und so aufgrund der Größe der Kapazität 16 nur zu einem vergleichsweise langsamen Anstieg der Zwischenkreisspannung führen. Zumindest ist dieser Anstieg langsam genug, so dass die Spannungsregelung des Wechselrichters 3 ausreichend schnell auf den drohenden Anstieg der Zwischenkreisspannung reagieren kann, um ihm durch angepasste Taktung der Schalter 15, d. h. Einspeisung von Strom in das Wechselstromnetz, zu begegnen. Trotz des harten Zuschaltens der weit über dem vorgegebenen Wert der Zwischenkreisspannung liegenden Leerlaufspannung des Photovoltaikfeldes 2 treten daher keine übermäßigen Spannungen über dem Wechselrichter 3 auf. Falls die Zwischenkreisspannung im Einzelfall einen kritischen Wert annehmen sollte, wird der Wechselrichter 3 durch Öffnen der Schalter 15 gesperrt, und die Schalter 6 gemäß Fig. 1 werden wieder geöffnet. Die Zwischenkreisspannung über der Kapazität 16 baut sich dann über eine in Fig. 2 als Entladungswiderstand angedeutete Entladungseinrichtung 17 ab. Anschließend kann ein erneuter Zuschaltversuch unternommen werden. Der Wechselrichter 3 ist hier als dreiphasiger Wechselrichter skizziert, könnte aber auch einphasig sein.

### BEZUGSZEICHENLISTE

- 1: Vorrichtung
- 2: Photovoltaikfeld
- 3: Wechselrichter
- 4: Wechselstromnetz
- 5: Segment
- 6: Schalter
- 7: Gleichspannungszwischenkreis
- 8: Netzschalter
- 9: EMV-Filter
- 10: Hilfsnetzschalter
- 11: Drossel
- 12: Ausgangsleitung
- 13: Freilaufdiode
- 14: Wechselrichterbrücke
- 15: Schalter
- 16: Kapazität
- 17: Entladungseinrichtung
- 18: Eingangsleitung

## Patentansprüche

1. Verfahren zum Zuschalten eines Photovoltaikfeldes (2) über einen Wechselrichter (3) zu einem Wechselstromnetz (4), wobei ein Gleichspannungszwischenkreis (7) am Eingang des Wechselrichters (3) aus dem Wechselstromnetz (4) vorgeladen wird, wobei die Zwischenkreisspannung des Gleichspannungszwischenkreises (7) mit dem an das Wechselstromnetz (4) angeschlossenen Wechselrichter (3) auf einen vorgegebenen Wert eingeregelt wird und wobei dann das Photovoltaikfeld (2) dem Gleichspannungszwischenkreis (7), dessen Zwischenkreisspannung auf den vorgegebenen Wert geregelt wird, zugeschaltet wird.

2. Verfahren nach Anspruch 1, **dadurch gekennzeichnet, dass** der Wert, auf den die Zwischenkreisspannung eingeregelt wird, kleiner als eine Leerlaufspannung des Photovoltaikfeldes (2) vorgegeben wird.

3. Verfahren nach Anspruch 1 oder 2, **dadurch gekennzeichnet, dass** die Leerlaufspannung des Photovoltaikfeldes (2) dem Gleichspannungszwischenkreis (7), dessen Zwischenkreisspannung auf den vorgegebenen Wert geregelt wird, unmittelbar zugeschaltet wird.

4. Verfahren nach einem der vorangehenden Ansprüche, **dadurch gekennzeichnet, dass** der Wert, auf den die Zwischenkreisspannung eingeregelt wird, größer als eine Scheitelspannung des Wechselstromnetzes (4) vorgegeben wird.

5. Verfahren nach einem der vorangehenden Ansprüche, **dadurch gekennzeichnet, dass** das Photovoltaikfeld (2) in Segmente (5) unterteilt wird, die dem Gleichspannungszwischenkreis (7), dessen Zwischenkreisspannung auf den vorgegebenen Wert geregelt wird, nacheinander zugeschaltet werden.

6. Verfahren nach einem der vorangehenden Ansprüche, **dadurch gekennzeichnet, dass** zum Voraufladen des Gleichspannungszwischenkreises (7) ein von dem Wechselstromnetz (4) in den Gleichspannungszwischenkreis (7) fließender Ladestrom mit Freilaufdioden (13) einer Wechselrichterbrücke (14) des Wechselrichters (3) gleichgerichtet wird.

7. Verfahren nach Anspruch 6, **dadurch gekennzeichnet, dass** der Ladestrom mit einer Drossel (11) oder einem Widerstand begrenzt wird.

8. Verfahren nach Anspruch 6 oder 7, **dadurch gekennzeichnet, dass** der Ladestrom mit einem Transformator umgespannt wird.

9. Verfahren nach einem der Ansprüche 6 bis 8, **dadurch gekennzeichnet, dass** die Drossel (11) oder der Widerstand oder der Transformator nur während des Vorladens, insbesondere nur während des Voraufladens oder nur eines Teils des Voraufladens, des Gleichspannungszwischenkreises (7) zwischen das Wechselstromnetz (4) und den Wechselrichter (3) geschaltet werden.

10. Verfahren nach einem der vorhergehenden Ansprüche, **dadurch gekennzeichnet, dass** die Regelung der Zwischenkreisspannung auf den vorgegebenen Wert nach dem vollständigen Zuschalten des Photovoltaikfeldes (2) zu dem Gleichspannungszwischenkreis (7) für ein MPP-Tracking freigegeben wird.

11. Vorrichtung (1) zur Einspeisung elektrischer Energie von einem Photovoltaikfeld (2) in ein Wechselstromnetz (4), mit einem Wechselrichter (3), mit einem Gleichspannungszwischenkreis (7) am Eingang des Wechselrichters (3), mit einer Regelung für die Zwischenkreisspannung des Gleichspannungszwischenkreises (7), mit mindestens einem Schalter (6) zum Zuschalten des Photovoltaikfeldes (2) zu dem Gleichspannungszwischenkreis (7), mit mindestens einem Netzschalter (8, 10) zum Zuschalten des Wechselrichters (3) zu dem Wechselstromnetz (4) und mit einer Zuschaltsteuerung für das Zuschalten des Photovoltaikfeldes (2) über den Wechselrichter (3) zu dem Wechselstromnetz (4), **dadurch gekennzeichnet, dass** die Zuschaltsteuerung zuerst den Netzschalter (8, 10) schließt, dann die Regelung für die Zwischenkreisspannung aktiviert, um die Zwischenkreisspannung auf einen vorgegebenen Wert einzuregeln, und anschließend den Schalter (6) zum Zuschalten des Photovoltaikfeldes (2) schließt.

12. Vorrichtung (1) nach Anspruch 11, **dadurch gekennzeichnet, dass** Schalter (15) des Wechselrichters (3) für eine kleinere zulässige Spannung als die Leerlaufspannung des Photovoltaikfeldes (2) ausgelegt sind.

13. Vorrichtung (1) nach Anspruch 11 oder 12, **dadurch gekennzeichnet, dass** mehrere Schalter (6) zum segmentweisen Zuschalten des Photovoltaikfeldes (2) zu dem Zwischenkreis (7) vorgesehen sind.

14. Vorrichtung (1) nach einem der vorangehenden Ansprüche, **dadurch gekennzeichnet, dass** der Wechselrichter (3) eine Wechselrichterbrücke (14) mit Freilaufdioden (13) aufweist, die einen Ladestrom von dem Wechselstromnetz (4) in den Gleichspannungszwischenkreis (7) passiv gleichrichten.

15. Vorrichtung (1) nach Anspruch 14, **dadurch gekennzeichnet, dass** eine Drossel (11) oder ein Widerstand zum Begrenzen des Ladestroms oder ein Transformator zum Umspannen des Ladestroms vorgesehen ist, die/der in einem alternativ zwischen den Wechselrichter (3) und das Wechselstromnetz (4) schaltbaren Stromweg vorgesehen sind.
